# EUROPÄISCHE PATENTANMELDUNG

(11) **EP 0 643 906 A1**
(43) Veröffentlichungstag der Anmeldung: **22.03.1995**
(21) Anmeldenummer: 94112477.8
(22) Anmeldetag: 10.08.1994
(51) Int. Cl.: A01F 12/40, A01D 82/00

(54) **Erntemaschine, insbesondere Mähdrescher, bei der am rückwärtigen Ende eine Aufbereitungseinrichtung angeordnet ist**

(30) Priorität: 17.09.1993 DE 4331648
(71) Anmelder: SAME S.p.A., I-24047 Treviglio (Bergamo) (IT)
(72) Erfinder: Gropp, Heiko, D-89428 Syrgenstein (DE); Häfele, Martin, D-73460 Hüttlingen (DE)
(74) Vertreter: Nau, Walter, Dipl.-Ing.

(57) **Zusammenfassung**

Ausgehend von einer Erntemaschine zumindest mit Schneid-, Dresch- und Reinigungseinrichtungen zur Ernte von Erntegut, das nach einer Verarbeitung in den Einrichtungen im wesentlichen in eine Erntegutmenge und eine Halmgutmenge aufgeteilt ist, wird die Aufgabe der Erfindung, eine Erntemaschine derart auszubilden, daß der Verarbeitungsprozeß, insbesondere die anschließende Umsetzung in dem Boden, des Erntegutes optimiert wird, dadurch gelöst, daß nach den Einrichtungen eine zumindest zwei einen Spaltbereich bildenden Aufbereitungselemente (Walzen (7)) aufweisende Aufbereitungseinrichtung (6) angeordnet ist, die die durch den Spaltbereich geführte Halmgutmenge derart aufbereitet, daß die Oberflächenstruktur der in der Halmgutmenge enthaltenen Bestandteile zumindest teilweise in einer die Zersetzung der Bestandteile nach Ablage auf dem Boden beziehungsweise Einarbeitung in den Boden stark fördernden Weise behandelt wird.

## Beschreibung

Die Erfindung betrifft eine Erntemaschine, insbesondere einen Mähdrescher, zumindest mit Schneid-, Dresch- und Reinigungseinrichtungen nach dem Oberbegriff des Patentanspruches 1.

Allgemeiner Stand der Technik sind Erntemaschinen, insbesondere Mähdrescher, die zumindest Schneid-, Dresch- und Reinigungseinrichtungen zur Ernte von Erntegut aufweisen. Der Materialfluß besteht im wesentlichen darin, daß das Erntegut geschnitten, gedroschen und anschließend gereinigt wird. Nach diesem Verarbeitungsvorgang ist das Erntegut (beispielsweise Getreide) im wesentlichen in eine Erntegutmenge (beispielsweise Korn) und eine Halmgutmenge (beispielsweise Spreu und Stroh) aufgeteilt. Die Erntegutmenge wird in der Regel in der Erntemaschine gesammelt und von dieser zur Weiterverarbeitung abgegeben. Die Halmgutmenge wird in der Regel nach der Verarbeitung direkt abgegeben und auf dem Feld abgelegt. Zur Umsatzförderung der abgegebenen Halmgutmenge auf dem Feld beziehungsweise nach einer Einarbeitung in den Boden ist es bekannt, nach dem Verarbeitungsvorgang die Halmgutmenge einem Häcksler zuzuführen, der die Halmgutmenge zerkleinert (zerschneidet) und auf dem Boden ablegt. Der Einsatz eines Häckslers hat jedoch den Nachteil, daß zum Zerkleinern der Halmgutmenge ein hoher Energiebedarf erforderlich ist und die zerkleinerte Halmgutmenge nach Einarbeitung in den Boden aus biologischer Sicht keine umsetzungförderliche Struktur aufweist.

Der Erfindung liegt die Aufgabe zugrunde, eine Erntemaschine, insbesondere einen Mähdrescher, derart auszugestalten, daß der Verarbeitungsprozeß, insbesondere die anschließende Umsetzung auf beziehungsweise in dem Boden, des Erntegutes optimiert wird.

Diese Aufgabe ist dadurch gelöst, daß nach den Einrichtungen eine zumindest zwei einen Spaltbereich bildenden Aufbereitungselemente aufweisende Aufbereitungseinrichtung angeordnet ist, die die durch den Spaltbereich geführte Halmgutmenge derart aufbereitet, daß die Oberflächenstruktur der in der Halmgutmenge enthaltenen Bestandteile zumindest teilweise in einer die Zersetzung der Bestandteile nach Ablage auf dem Boden beziehungsweise Einarbeitung in den Boden stark fördernden Weise behandelt wird. Bei der bisher bekannten Zerkleinerung der Halmgutmenge mittels Häckslern erfolgte eine Zerkleinerung der Halmgutmenge beziehungsweise deren Bestandteile, was jedoch energieaufwendig ist und aufgrund der Zerkleinerung im wesentlichen in Querrichtung zu den Bestandteilen (beispielsweise Halmen) eine optimale Umsetzung der Halmgutmenge auf dem Boden beziehungsweise nach Einarbeitung in den Boden aus biologischer Sicht nicht gegeben ist. So hat es sich überraschend herausgestellt, daß zur Optimierung des Verarbeitungsprozeßes, insbesondere die anschließende Einarbeitung und Umsetzung in den Boden, des Erntegutes dann gegeben ist, wenn die Halmgutmenge derart aufbereitet wird, daß die Oberflächenstruktur der in der Halmgutmenge enthaltenen Bestandteile zumindest teilweise in einer die Zersetzung der Bestandteile nach Ablage auf dem Boden beziehungsweise Einarbeitung in den Boden stark fördernden Weise behandelt wird. Zu diesem Zweck ist erfindungsgemäß nach den Einrichtungen (insbesondere nach einer Reinigungseinrichtung) eine Aufbereitungseinrichtung angeordnet, die die Halmgutmenge in der beschriebenen Weise behandelt. Zur Erzeugung einer zersetzungsförderlichen Struktur werden die Bestandteile derart behandelt, daß beispielsweise eine Röhrchenstruktur von Halmen zerstört wird, um die inneren Oberflächen der Halme insbesondere für Bakterien und Pilze leicht zugänglich zu machen. Dies geschieht dadurch, daß durch ein Reiben und Zerfasern (gegebenenfalls unter Druck) der Halme (Stengel), die als Bestandteile in der Halmgutmenge im wesentlichen enthalten sind, die umsetzungsförderliche Struktur erreicht wird. Diese Aufbereitung der Halmgutmenge hat neben der schnellen Umsetzung der Halmgutmenge in beziehungsweise auf dem Boden den Vorteil, daß bei der Einarbeitung der Halmgutmenge in den Boden dieses verstopfungsfrei und gleichmäßig vorgenommen werden kann. Bei reduzierten Bodenbearbeitungssystemen ist eine Beeinträchtigung der neu eingebrachten Saat durch die aufliegende Halmgutmenge (beispielsweise Stroh) nicht beeinträchtigt.

Zur Aufbereitung der Halmgutmenge ist die Aufbereitungseinrichtung als Planetenwalzen-Aufbereitungseinrichtung mit zumindest einer Sonnenwalze (ein Aufbereitungselement) und mehreren dieser Sonnenwalze zugeordneten und sich mit unterschiedlicher Umfangsgeschwindigkeit gegenläufig drehenden Planetenwalzen (weitere Aufbereitungselemente) ausgebildet. Eine derartige Planetenwalzen-Aufbereitungseinrichtung ist in den Figuren gezeigt und näher beschrieben.

In einer Weiterbildung der Erfindung weist die Aufbereitungseinrichtung als Aufbereitungselemete zumindest einen Stator und einen Rotor auf. Bei dem Rotor handelt es sich beispielsweise um einen Fingerrotor, an dessen Außenumfang vorzugsweise beweglich gelagerte Finger angeordnet sind, die durch die Drehbewegung des Fingerrotors im wesentlichen senkrecht zur Längsachse abstehen. Als Stator sind beispielsweise feststehende Finger denkbar, die bezogen auf die Drehrichtung neben den rotierenden Fingern angeordnet sind. In dem Spaltbereich zwischen den Fingern erfolgt die Durchführung und Aufbereitung der Halmgutmenge durch einen im wesentlichen "schlagenden" Effekt, der auf die Oberflächenstruktur einwirkt. In einer weiteren Ausgestaltung ist es denkbar, zumindest zwei sich gegenläufig drehende Fingerrotoren zur Aufbereitung der Halmgutmenge einzusetzen.

In Weiterbildung der Erfindung ist die Aufbereitungseinrichtung als Reihenwalzen-Aufbereitungseinrichtung mit zumindest zwei einander zugeordneten und sich mit unterschiedlicher Umfangsgeschwindigkeit gegenläufig drehenden Walzen (Aufbereitungselemente) ausgebildet. Eine Ausgestaltung dieser Reihenwalzen-Aufbereitungseinrichtung ist ebenfalls in den Figuren gezeigt und näher beschrieben.

In Weiterbildung der Erfindung sind die Walzen der Aufbereitungseinrichtung zumindest teilweise keilscheibenartig ausgebildet, wobei eine besondere Ausgestaltung darin besteht, daß die Walzen der Aufbereitungseinrichtung ineinander eingreifen. Dadurch ist der Vorteil gegeben, daß sich die Oberfläche der Walzen vergrößert, so daß der Durchsatz der Halmgutmenge durch die Aufbereitungseinrichtung gesteigert wird. In vorteilhafter Weise erfolgt eine derartige Ausgestaltung der Walzen sowohl bei der Planetenwalzen- als auch bei der Reihenwalzen-Aufbereitungseinrichtung.

In Weiterbildung der Erfindung sind die Oberflächen der Walzen profiliert. Durch eine beispielsweise Aufrauung und Einbringung von Quer-beziehungsweise Längsstegen oder Nuten ist in vorteilhafter Weise eine Erhöhung des Aufbereitungsvorganges (Reiben und Zerfasern, Quetschen) gegeben.

In Weiterbildung der Erfindung weist die Aufbereitungseinrichtung ein Chassis zum Einbeziehungsweise Anbau der Aufbereitungseinrichtung in beziehungsweise an der Erntemaschine auf, an dem zumindest die Walzen angeordnet sind. Der Einsatz eines Chassis hat den Vorteil, daß die Aufbereitungseinrichtung als komplette Einheit bei der Produktion der Erntemaschine eingesetzt werden kann beziehungsweise im späteren Betrieb nachgerüstet werden kann. Dies ist ebenso von Vorteil, wenn die Aufbereitungseinrichtung im Reparatur- beziehungsweise Reinigungsfall ausgebaut werden muß.

In Weiterbildung der Erfindung ist die Aufbereitungseinrichtung in einem Gehäuse angeordnet, das an einem Ende der Erntemaschine, insbesondere an einer Strohhaube des Mähdreschers, befestigt ist. Dadurch ist der Vorteil gegeben, daß eine während des Aufbereitungsprozeßes entstehende Staub- und Geräuschentwicklung wirksam eingedämmt werden kann. Hierbei ist es denkbar, das Gehäuse an dem Ende der Erntemaschine zu befestigen beziehungsweise an dem Ende der Erntemaschine zu integrieren. In dem Gehäuse kann ergänzend das Chassis (Rahmen) angeordnet sein, das das Gehäuse trägt.

In Weiterbildung der Erfindung ist die Aufbereitungseinrichtung, insbesondere das zuvor genannte Chassis und/oder das zuvor genannte Gehäuse, als Wechseleinheit ausgestaltet. Dadurch ist der Vorteil gegeben, daß die Aufbereitungseinrichtung gegen einen Häcksler oder anderweitige Einrichtungen ausgetauscht werden kann, so daß die Erntemaschine für jeden Einsatzzweck, insbesondere beim Einsatz der Erntemaschine in Großbetrieben, ausrüstbar ist. Es bietet sich beispielsweise an, in Ergänzung zu der Aufbereitungseinrichtung oder anstelle dieser eine Verteileinrichtung zur gleichmäßigen Verteilung der Halmgutmenge auf dem Boden und/oder einen Häcksler anzuordnen.

So ist in einer weiteren Ausgestaltung der Erfindung vorgeschlagen, daß der Aufbereitungseinrichtung eine Einrichtung zur Einstellung der Verteilbreite der aufbereiteten Halmgutmenge nachgeordnet ist. Bei dieser Einrichtung zur Einstellung der Verteilbreite kann es sich beispielsweise um nachgeschaltete Wurfförderer, Tellerverteiler oder auch lediglich um Leitbleche (insbesondere verstellbar) handeln, die die Einstellung der Verteilbreite der aufbereiteten Halmgutmenge gestatten. Dabei ist auch eine solche Einrichtung zur Einstellung denkbar, die es gestattet, die Halmgutmenge im wesentlichen in einem Querbereich direkt unterhalb der Aufbereitungseinrichtung oder auch in einem Bereich in Richtung der Schneideinrichtung der Erntemaschine abzulegen. Damit werden insbesondere bei Wendevorgängen der Erntemaschine am Rande eines Feldes Verschmutzungen von Flächen außerhalb des Feldes vermieden.

In Weiterbildung der Erfindung sind die Walzen der Aufbereitungseinrichtung in Abhängigkeit der vorgeordneten Einrichtungen, insbesondere der Reinigungseinrichtung, antreibbar. Dies hat den Vorteil, daß der Durchsatz der Halmgutmenge durch die Aufbereitungseinrichtung und damit der Aufbereitungsprozeß optimal dem Materialfluß in der Erntemaschine angepaßt werden kann. Die Anpassung an die Verarbeitungsgeschwindigkeit der vorgeordneten Reinigungseinrichtung (Schüttler) hat den Vorteil, daß dieser Bereich gegebenenfalls als Pufferraum dienen kann, falls im wesentlichen von den Schneid- und Drescheinrichtungen eine zu große Menge von Erntegut zugeführt wird, die in diesem Augenblick von der Aufbereitungseinrichtung nicht verarbeitbar ist. Hier bietet es sich an, den Antrieb der Aufbereitungseinrichtung mit dem Antrieb zumindest einer der vorgeordneten Einrichtungen zu koppeln. Darüber hinaus ist ein eigenständer Antrieb der Aufbereitungseinrichtung denkbar, der in Abhängigkeit von der Verarbeitungsgeschwindigkeit der vorgeordneten Einrichtungen oder auch in Abhängigkeit von der Fahrgeschwindigkeit der Erntemaschine steuerbar ist. Denkbar ist auch, den Antrieb der Aufbereitungseinrichtung in einen Regelprozeß zu integrieren, so daß dieser in Abhängigkeit von einer Vielzahl von Parametern (beispielsweise Fahrgeschwindigkeit der Erntemaschine, von der Schneideinrichtung erfaßte Erntegutmenge, von der erfaßten Erntegutmenge, Art und Zustand der Erntegutmenge) zu regeln.

Es sei darauf hingewiesen, daß die erfindungsgemäße Aufbereitungseinrichtung allgemein zur Aufbereitung von Erntegut einsetzbar ist, bei der durch die beschriebene Aufbereitung eine Umsetzung in einer stark fördernden Weise eintritt.

Weitere Ausgestaltungen und Anordnungen der erfindungsgemäßen Aufbereitungseinrichtung sind im folgenden näher beschrieben und in den Figuren gezeigt.

Es zeigen:
- Figur 1:: Eine Erntemaschine mit einer Reihenwalzen-Aufbereitungseinrichtung,
- Figur 2:: eine Erntemaschine mit einer Planetenwalzen-Aufbereitungseinrichtung,
- Figur 3:: Ausgestaltungen von Walzen.

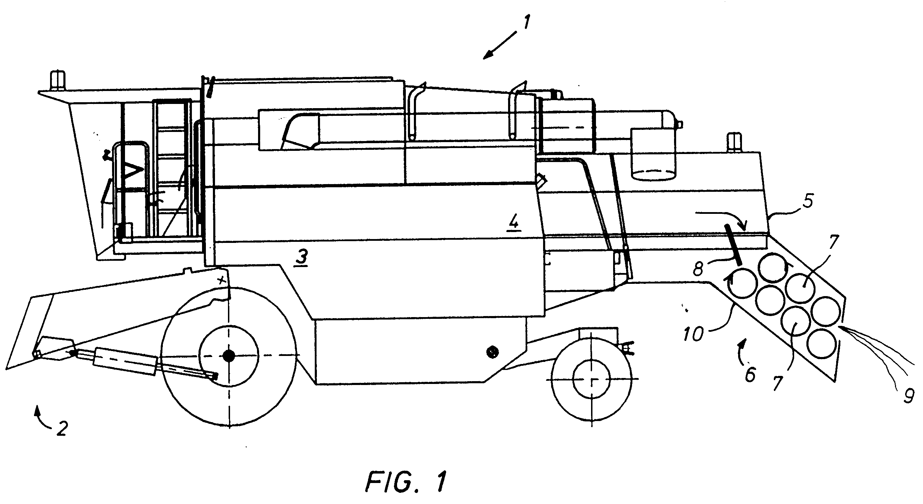

Figur 1 zeigt eine Erntemaschine, die als Mähdrescher 1 ausgebildet ist. Dieser Mähdrescher 1 ist ausgerüstet zumindest mit ansich bekannten Einrichtungen wie einer Schneideinrichtung 2, einer Drescheinrichtung 3 sowie einer Reinigungseinrichtung 4 (in den Figuren schematisch angedeutet), die das Erntegut (beispielsweise Getreide) schneiden, dreschen und reinigen. Bei dem in dieser Reihenfolge erfolgenden Materialfluß (Verarbeitungsvorgang) erfolgt eine Aufteilung des Erntegutes im wesentlichen in eine Erntegutmenge (Korn) und eine Halmgutmenge (im wesentlichen Stroh). Während das Korn in einem nicht gezeigten Korntank des Mähdreschers 1 gesammelt wird und abgebbar ist, wird die nach der Reinigungseinrichtung 4 anfallende Halmgutmenge einer an einer Strohhaube 5 des Mähdreschers 1 angeordneten Reihenwalzen-Aufbereitungseinrichtung 6 zugeführt. Diese Reihenwalzen-Aufbereitungseinrichtung 6 weist mehrere einander zugeordnete und sich mit unterschiedlicher Umfangsgeschwindigkeit gegenläufig drehende Walzen 7 (Aufbereitungselemente) auf, die einen Spaltbereich bilden, durch den die Halmgutmenge geführt wird. Die abgetrennte Halmgutmenge wird der Reihenwalzen-Aufbereitungseinrichtung 6 über eine Führungseinrichtung 8 (in Pfeilrichtung) dem Spaltbereich zugeführt, wobei die Halmgutmenge zwischen den Walzen 7 geleitet ist und aufbereitet (zerfasert) wird. Die derart aufbereitete Halmgutmenge wird am Ende der Reihenwalzen-Aufbereitungseinrichtung 6 als aufbereitete Halmgutmenge 9 abgegeben, wobei die Abgabe durch eine entsprechend ausgestaltete Öffnung in einem Gehäuse 10 der Reihenwalzen-Aufbereitungseinrichtung 6 erfolgt. In der Figur 1 ist gezeigt, daß das Gehäuse 10 am rückwärtigen Ende des Mähdreschers 1 an der Strohhaube 5 angebracht ist. Es ist auch denkbar, die Reihenwalzen-Aufbereitungseinrichtung 6 im Bereich der Strohhaube 5 zu integrieren. So ist es denkbar, in dem Bereich, in dem die aufbereitete Halmgutmenge 9 abgegeben wird, eine Einrichtung zur Einstellung der Verteilbreite nachzuordnen.

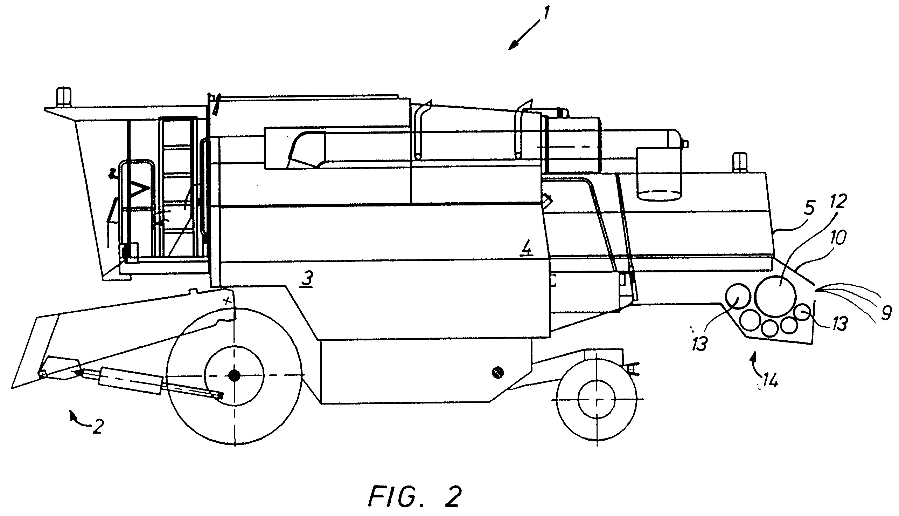

Figur 2 zeigt eine Erntemaschine mit einer Planetenwalzen-Aufbereitungseinrichtung. Neben den in Figur 1 gezeigten und beschriebenen sowie mit den gleichen Bezugsziffern versehenen Komponenten ist in Figur 2 ein Mähdrescher 1 gezeigt, an dessen rückwärtigem Ende (im Bereich der Strohhaube 5) eine Planetenwalzen-Aufbereitungseinrichtung 11 angeordnet ist. Diese Planetenwalzen-Aufbereitungseinrichtung 11 besteht im wesentlichen aus einer Sonnenwalze 12, in deren Außenumfangsbereich Planetenwalzen 13 angeordnet sind, wodurch sich wiederum ein Spaltbereich zwischen den Walzen ergibt. Wie in Figur 2 gezeigt ist, ist der Durchmesser der Sonnenwalze 12 größer als der Durchmesser der Planetenwalzen 13, wobei in Richtung des Materialflusses der Durchmesser der Planetenwalzen 13 abnimmt. Darüber hinaus ist es denkbar, daß die Sonnenwalze 12 und die Planetenwalzen 13 den gleichen Durchmesser aufweisen oder daß sämtliche Planetenwalzen 13 den gleichen Durchmesser aufweisen.

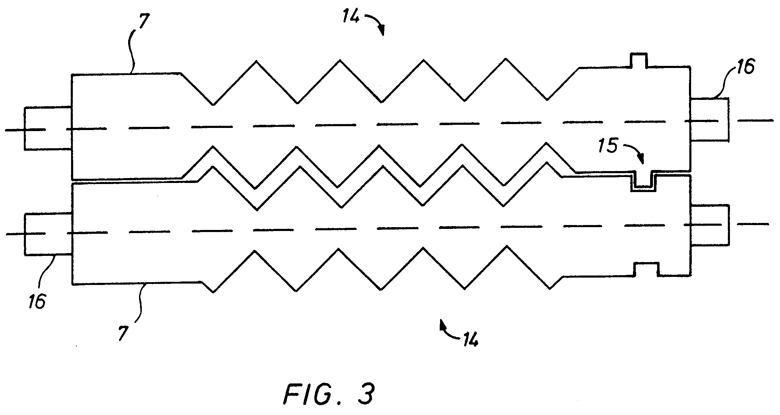

Figur 3 zeigt Ausgestaltungen der Walzen 7, die zumindest teilweise in Bereichen 14 keilscheibenartig ausgebildet sind und ineinander eingreifen. Diese Ausgestaltung hat den Vorteil, daß die zwischen den Bereichen 14 geführte Halmgutmenge im Bereich einer großen Oberfläche aufbereitet wird. Weiterhin ist es vorgesehen, insbesondere in einem Außenbereich der Walzen 7, einen Feder-Nut-Bereich 15 vorzusehen, der der Führung der Walzen 7, der Führung der Halmgutmenge 9 sowie einer Abdichtung gegenüber Achsen 16 der Walzen 7 dient. Bei den in Figur 3 gezeigten Walzen 7 kann es sich in einer alternativen Ausgestaltung ebenfalls um die Sonnenwalze 12 beziehungsweise die Planetenwalzen 13 handeln. Weiterhin ist es denkbar, unter Weglassung oder unter Einbeziehung des Feder-Nut-Bereiches 15 die keilscheibenförmige beziehungsweise keilscheibenartigen Bereiche 14 bis in den Ansatzbereich der Achsen 16 auszudehnen. Ebenso ist es denkbar, daß die keilscheibenförmigen Bereiche 14 in ihrer Erstreckung über die Längsachse der Walzen 7 (beziehungsweise 12, 13) unterbrochen sind.

Es sei darauf hingewiesen, daß hinsichtlich der Ausgestaltungen der Reihenwalzen-Aufbereitungseinrichtung 6 und der Planetenwalzen-Aufbereitungseinrichtung 11 ergänzend und nicht ausschließlich die Patentanmeldungen DE 41 32 759 (Planetenwalzen), DE 42 28 857 (Reihenwalzen) sowie DE 42 29 060 weitere spezielle und detaillierte Ausgestaltungen zu diesen Aufbereitungseinrichtungen zeigen und damit Bestandteil des Offenbarungsgehaltes dieser Patentanmeldung sind.

## Patentansprüche

1. Erntemaschine, insbesondere Mähdrescher, zumindest mit Schneid-, Dresch- und Reinigungseinrichtungen zur Ernte von Erntegut, das nach einer Verarbeitung in den Einrichtungen im wesentlichen in eine Erntegutmenge und eine Halmgutmenge aufgeteilt ist,
*dadurch gekennzeichnet,* daß in Förderrichtung nach den Einrichtungen eine Aufbereitungseinrichtung, die zumindest zwei einen Spaltbereich bildende Aufbereitungselemente aufweist, angeordnet ist, die die durch den Spaltbereich geführte Halmgutmenge derart aufbereitet, daß die Oberflächenstruktur der in der Halmgutmenge enthaltenen Bestandteile zumindest teilweise in einer die Zersetzung der Bestandteile nach Ablage auf dem Boden beziehungsweise Einarbeitung in den Boden stark fördernden Weise behandelt wird.

2. Erntemaschine nach Anspruch 1,
*dadurch gekennzeichnet,* daß die Aufbereitungseinrichtung als Planetenwalzen-Aufbereitungseinrichtung mit zumindest einer Sonnenwalzen und mehreren dieser Sonnenwalze zugeordneten und sich mit unterschiedlicher Umfangsgeschwindigkeit gegenläufig drehenden Planetenwalze ausgebildet ist.

3. Erntemaschine nach Anspruch 1 oder 2,
*dadurch gekennzeichnet,* daß die Aufbereitungseinrichtung zumindest einen Stator und eine Rotor aufweist.

4. Erntemaschine nach Anspruch 1, 2 oder 3,
*dadurch gekennzeichnet,* daß die Aufbereitungseinrichtung als Reihenwalzen-Aufbereitungseinrichtung mit zumindest zwei einander zugeordneten und sich mit unterschiedlicher Umfangsgeschwindigkeit gegenläufig drehenden Walzen ausgebildet ist.

5. Erntemaschine nach einem der vorhergehenden Ansprüche,
*dadurch gekennzeichnet,* daß die Walzen der Aufbereitungseinrichtung zumindest teilweise keilscheibenartig ausgebildet sind.

6. Erntemaschine nach einem der vorhergehenden Ansprüche,
*dadurch gekennzeichnet,* daß die Walzen der Aufbereitungseinrichtung ineinander eingreifen.

7. Erntemaschine nach einem der vorhergehenden Ansprüche,
*dadurch gekennzeichnet,* daß die Oberflächen der Walzen profiliert ist.

8. Erntemaschine nach einem der vorhergehenden Ansprüche,
*dadurch gekennzeichnet,* daß die Aufbereitungseinrichtung ein Chasis zum Ein- bzw. Anbau der Aufbereitungseinrichtung in beziehungsweise an der Erntemaschine aufweist, an dem zumindest die Walzen angeordnet sind.

9. Erntemaschine nach einem der vorhergehenden Ansprüche,
*dadurch gekennzeichnet,* daß die Aufbereitungseinrichtung in einem Gehäuse angeordnet ist, das an einem Ende der Erntemaschine, insbesondere an einer Strohhaube des Mähdreschers, befestigt ist.

10. Erntemaschine nach einem der vorhergehenden Ansprüche,
*dadurch gekennzeichnet,* daß die Aufbereitungseinrichtung als Wechseleinheit ausgestaltet ist.

11. Erntemaschine nach einem der vorhergehenden Ansprüche,
*dadurch gekennzeichnet,* daß der Aufbereitungseinrichtung eine Einrichtung zur Einstellung der Verteilbreite der aufbereiteten Halmgutmenge nachgeordnet ist.

12. Erntemaschine nach einem der vorhergehenden Ansprüche,
*dadurch gekennzeichnet,* daß die Walzen der Aufbereitungseinrichtungen in Abhängigkeit der vorgeordneten Einrichtungen, insbesondere der Reinigungseinrichtung, antreibbar sind.
